# EUROPEAN PATENT APPLICATION

(11) **EP 1 184 853 A2**
(43) Date of publication of application: **06.03.2002**
(21) Application number: 01307241.8
(22) Date of filing: 24.08.2001
(51) Int. Cl.: G11B 7/085

(54) **Disc drive**

(30) Priority: 24.08.2000 JP 2000253417
(71) Applicant: Mitsumi Electric Company Ltd., Chofu-shi Tokyo (JP)
(72) Inventor: Hori, Ken'ichi, c/o Mitsumi Electric Co. Ltd., Atsugi-shi, Tokyo (JP)
(74) Representative: Moir, Michael Christopher

(57) **Abstract**

In a disc drive having a pickup portion (23) and a pickup guiding arrangement for reciprocatably guiding the pickup portion in a disc radial direction (C, D), the pickup guiding arrangement consists of a combination of a main shaft (34) and a sub-shaft (35) which is arranged with the sub-shaft inclined to the main shaft by a predetermined angle (θ) within a plane in parallel with a disc table surface (24a) of a turn table (24). The pickup portion (23) includes a sliding contact portion (37, 37A) for being slidably in contact with the sub-shaft. The sliding contact portion (37A) extends laterally outward a longer. The sliding contact portion may have a U-shaped cross section.

## Description

### Background of the Invention:

This invention relates to a disc drive and, more particularly, to a disc drive incorporated in an electronic equipment such as a personal computer or the like.

Disc drives of the type described are roughly classified into two types of structure. A disc drive of a first type is a type where a disc driving/reproducing mechanism such as an optical pickup, a disc motor, a turn table, and so on is incorporated in (mounted on) a tray. A disc drive of a second type is a type where only an optical disc is mounted on a tray and the above-mentioned disc driving/reproducing mechanism is contained in a unit (chassis) side. Throughout this specification, the former (the disc drive of the first type) is called a tray incorporated type disc drive while the latter (the disc drive of the second type) is called a unit contained type disc drive.

The tray incorporated type disc drive is disclosed, for example, in Japanese Unexamined Patent Publication Tokkai No. Hei 7-254202 or JP-A 7-254202, Japanese Unexamined Patent Publication Tokkai No. Hei 9-44955 or JP-A 9-44955, or Japanese Unexamined Patent Publication Tokkai No. 2000-20962 or JP-A 2000-20962. In addition, the unit contained type disc drive is disclosed, for example, in Japanese Unexamined Patent Publication Tokkai No. Hei 10-269666 or JP-A 10-269666.

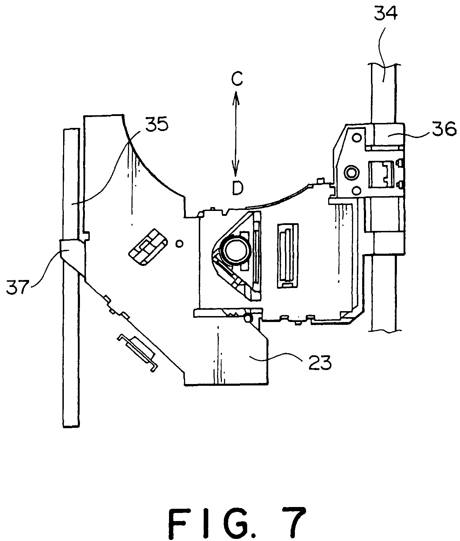

In the manner which will later be described in conjunction with Fig. 7, the disc drive of any of the first and the second types comprises a pickup portion for picking up data from an optical disc and a pickup driving portion for driving the pickup portion so as to sled move the pickup portion in a predetermined disc radial direction. The pickup driving portion including a main shaft and a sub-shaft for sled movably supporting the pickup portion at both sides thereof in the predetermined disc radial direction. In an existing disc drive, both of the main shaft and the sub-shaft are arranged so as to substantially extend in parallel with the predetermined disc radial direction. That is, the main shaft and the sub-shaft are arranged in parallel with each other. In addition, as disclosed in the above-mentioned JP-A 2000-20962, a combination of the main shaft and the sub-shaft is called pickup guide means for guiding the pickup portion so as to reciprocate the pickup portion in the predetermined disc radial direction.

More specifically, the main shaft comprises a lead screw which is arranged to extend in parallel with the predetermined disc radial direction as, for example, disclosed in the above-mentioned JP-A 9-44955. The pickup portion includes an engaging portion for engaging sleds of the lead screw. In addition, the pickup driving portion comprises a pickup driving motor having a driving shaft on which a gear is mounted, a pickup driving mechanism including other gears engaged with the gear of the driving shaft. The lead screw is rotatably driven through the pickup driving mechanism. Accordingly, when the pickup driving motor rotates to rotatably drive the lead screw through the pickup driving mechanism by a rotation force of the pickup driving motor, the pickup portion moves in the predetermined disc radial direction.

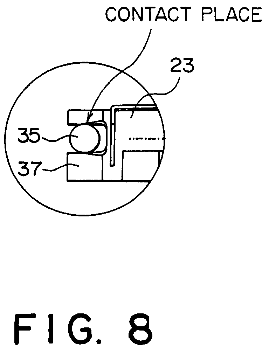

On the other hand, in the manner which will later be described in conjunction with Figs. 7 and 8, the sub-shaft comprises the guide portion (guide shaft) which extends in parallel with the lead screw to guide the sled movement of the pickup portion. The pickup portion includes a sliding contact portion having a U-shaped cross section that is slidably supported by the guide shaft.

In the disc drive, it is preferable that a skew between the pickup portion and the disc is as small as possible. However, although the disc drive is assembled so that the skew becomes small, wear occurs between the guide shaft and the sliding contact portion of the pickup portion while the pickup portion repeats the sled movement and it results in increasing the skew caused by mainly wearing away of the sliding contact portion of the pickup portion.

More specifically, inasmuch as the main shaft (lead screw) and the sub-shaft (guide shaft) are arranged in parallel with each other in the existing disc drive, the sliding contact portion of the pickup portion is in contact with the guide shaft at only one contact point during the sled movement of the pickup portion. Accordingly, the wear of the sliding contact portion is hard at this contact point and the wear therefore concentrates on this contact point. As a result, it is difficult to prevent the skew from increasing.

### Summary of the Invention:

It is therefore an object of this invention to provide a disc drive which is capable of preventing a skew from increasing.

It is another object of this invention to provide a disc drive of the type described, which is capable of making wear in a sliding contact portion of a pickup portion as small as possible by preventing the wear from concentrating at one place.

Other objects of this invention will become clear as the description proceeds.

The present invention provides a disc drive comprising a pickup portion for picking up data from a disc, a turn table for rotating said disc, said turn table having a disc table surface for receiving said disc, and a pickup driving portion for moving said pickup portion in a predetermined disc radial direction, said pickup driving portion including a main shaft and a sub-shaft for supporting said pickup portion at both sides thereof for movement in said predetermined disc radial direction, characterised in that said sub-shaft is inclined to said main shaft by a predetermined angle (θ, θA) within a plane substantially parallel to the disc table surface.

In a preferred embodiment, a disc drive comprises a pickup portion for picking up data from a disc and a turn table for rotatably holding the disc. The turn table has a disc table surface for holding the disc. A pickup driving portion moves the pickup portion in a predetermined disc radial direction. The pickup driving portion includes a main shaft and a sub-shaft for movably supporting the pickup portion at both sides thereof in the predetermined disc radial direction.

The sub-shaft is arranged with the sub-shaft inclined to the main shaft within a plane in parallel with the disc table surface.

In the afore-mentioned disc drive, the pickup portion may include a sliding contact portion for being slidably in contact with the sub-shaft. The sliding contact portion preferably may extend laterally outward . The sliding contact portion may have a U-shaped cross section.

### Brief Description of the Drawing:

Fig. 1 is a perspective plan view showing a tray incorporated type disc drive to which this invention is applicable;
Fig. 2A is a schematic perspective plan view showing the tray incorporated type disc drive illustrated in Fig. 1 at a state where a tray is pulled out thereof;
Fig. 2B is a schematic perspective left-hand side view showing the tray incorporated type disc drive illustrated in Fig. 2A;
Fig. 2C is a schematic perspective right-hand side view showing the tray incorporated type disc drive illustrated in Fig. 2A;
Fig. 3A is a perspective plan view showing a driving unit for use in the tray incorporated type disc drive illustrated in Fig. 1;
Fig. 3B is a perspective left-hand side view showing the driving unit illustrated in Fig. 3A;
Fig. 4 is a schematic perspective plan view showing the tray incorporated type disc drive illustrated in Fig. 1 at a state on reading data;
Fig. 5 is a top view showing an existing driving unit for use in an existing tray incorporated type disc drive;
Fig. 6 is a bottom view showing the existing driving unit illustrated in Fig. 5;
Fig. 7 is a plan view showing a main part (a pickup portion and pickup guiding means) of an existing disc drive;
Fig. 8 is an enlarged front view showing a sub-shaft and a sliding contact portion slidably supported by the sub-shaft for use in the main part of the existing disc drive illustrated in Fig. 7;
Fig. 9 is a plan view showing a main part (a pickup portion and pickup guiding means) of a disc drive according to a first embodiment of this invention;
Fig. 10 is an enlarged front view showing a sub-shaft and a sliding contact portion slidably supported by the sub-shaft for use in the main part of the existing disc drive illustrated in Fig. 9; and
Fig. 11 is a plan view showing a main part (a pickup portion and pickup guiding means) of a disc drive according to a second embodiment of this invention.

### Description of the Preferred Embodiment:

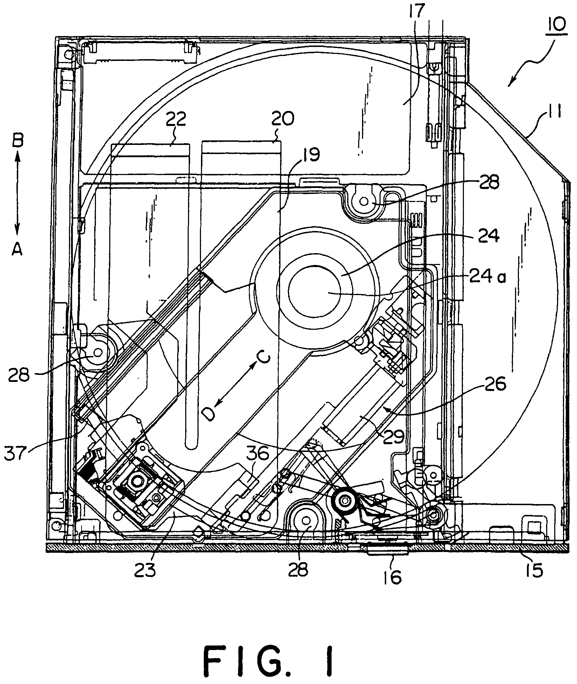

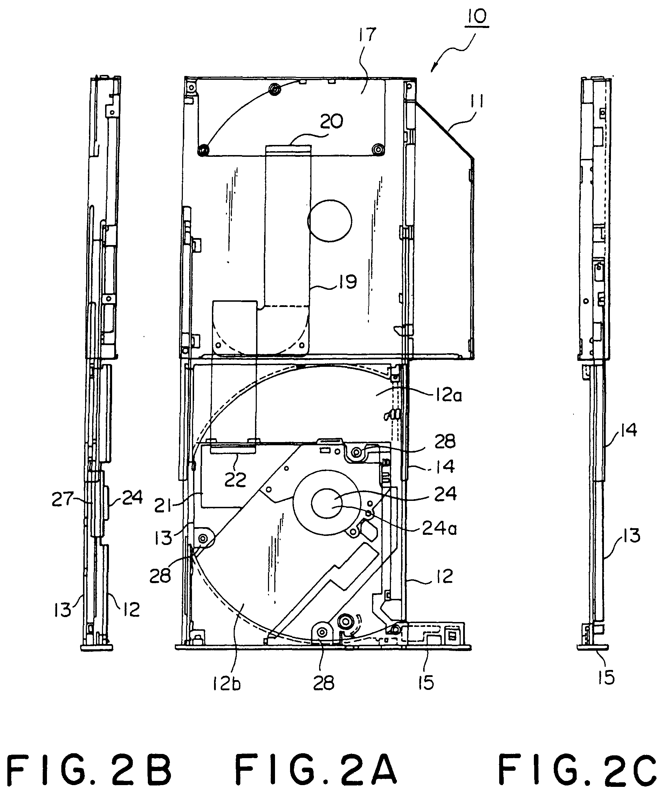

Referring to Figs. 1, 2A, 2B, and 2C, the description will proceed to a disc drive 10 to which this invention is applicable. The illustrated disc drive 10 is an apparatus of a type which is contained in a chassis of a note-type personal computer (not shown). In addition, the illustrated disc drive 10 is a tray incorporated type disc drive where a disc driving/reproducing mechanism such as an optical pickup, a disc motor, a turn table, and so on is incorporated in (or mounted on) a tray 12 in the manner which will later be described. Fig. 1 shows a state in which the tray 12 is moved at a disc mounted position where the tray 12 is received in a main chassis (outer case) 11. Figs 2A through 2C collectively show a state in which the tray 12 is moved at a disc exchange position where the tray 12 is pulled out of the main chassis (outer case) 11.

The disc drive 10 comprises the above-mentioned tray 12 for receiving a disc (CD-ROM) (not shown), a sub-chassis 13 for supporting the tray 12, and a tray sliding mechanism 14 for slidably supporting the tray 12.

The tray 12 is formed to have a width size smaller than a disc's external form so that a part of the disc (not shown) is jutted out from the tray 12. In addition, the tray 12 is slidable back and forth for the main chassis 11 by manual operation by using the tray sliding mechanism 14 in a direction depicted at arrows A and B in Fig. 1. In Fig. 1, the tray 12 is positioned at the disc mounted position so that the tray 12 is inserted in an insertion direction depicted at the arrow B. In Figs. 2A through 2C where the tray 12 is pulled out in a pulling out direction depicted at the arrow A, the tray 12 is positioned at the disc exchange position where the disc is exchanged for the tray 12.

As shown in Fig. 2A, the tray 12 has a disc opposite surface 12a for forming a space for receiving the disc and an opening 12b for the optical pickup and the turn table that is bored in the disc opposite surface 12a. The disc opposite surface 12a has a width size smaller than the disc's external form and is formed so as to cover an area which is equal to about two-thirds of the disc. With this structure, it is possible to miniaturize the disc drive 10.

The tray 12 has a front end to which a front bezel (panel) 15 is fixed. The front bezel 15 is integrated with the tray 12 to slidably move back and fourth in the direction depicted at the arrows A and B in Fig. 1. The front bezel 15 has a switch button 16 on the right-hand side of a center thereof that is for releasing a lock by a lock mechanism (not shown) on pulling out the tray 12. Accordingly, when the switch button 16 is turned on at the state illustrated in Fig. 1, the front bezel 15 projects for the main chassis 11 in the pulling out direction depicted at the arrow A by a predetermined amount in the manner already known. Therefore, operation of pulling out the tray 12 is easy.

The main chassis 11 has a rear part in which a circuit board 17 is disposed. On the sub-chassis 13 for supporting the tray 12, a driving unit 18 which will later be described is mounted. Inasmuch as the tray 12, together with the driving unit 18, moves in the direction depicted at the arrows A and B as described above, a connection between the driving unit 18 and the circuit board 17 is carried out by using a flexible circuit board 17. In addition, the flexible circuit board 17 has an end of the driving unit side that is connected to a connector (terminal portion) 22 disposed on a motor base 21.

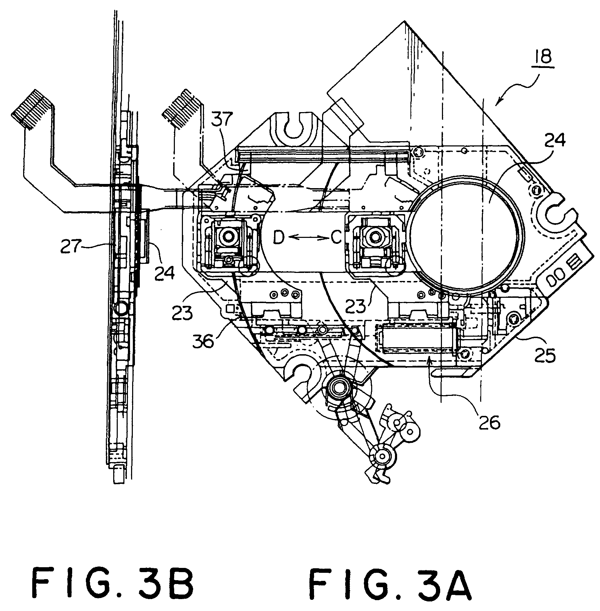

Referring now to Figs. 3A and 3B in addition to Figs. 1 through 2C, the description will proceed to the driving unit 18. The driving unit 18 mounts a pickup portion 23, a turn table 24, and so on thereon. As described above, the driving unit 18 is disposed on the sub-chassis 13 upwards. The driving unit 18 comprises the turn table 24 for rotatably holding the disc (not shown), a base 25 mounted on an upper portion of the sub-chassis 13, a pickup portion 23 slidably mounted on the base 25, a pickup driving portion 26 for moving the pickup portion 23 in a predetermined disc radial direction, a disc motor 27 for rotating the turn table 24, and so on. The pickup portion 23 picks up data from the disc (not shown). The turn table 24 has a disc table surface 24a for holding the disc (not shown).

Although the base 25 is put in the opening 12b of the tray 12, vibration control members 28 for absorbing vibrations are disposed between the sub-chassis 13 and the base 25. Accordingly, inasmuch as vibrations in the pickup portion 23 mounted on the base 25 and the turn table 24 are absorbed by the vibration control members 28, an influence of the vibrations is mitigated on a slide movement of the tray 12.

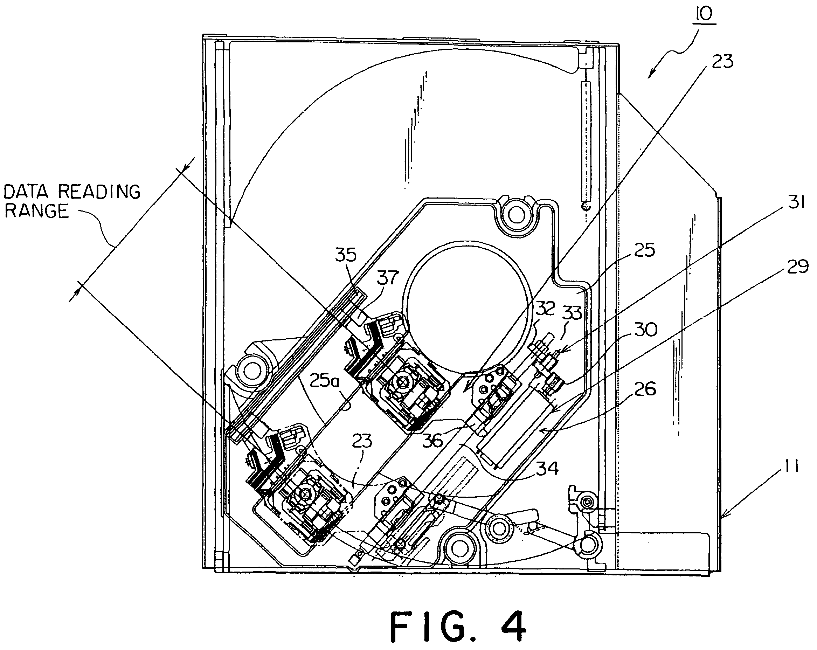

Referring to Fig. 4 also, the pickup driving portion 26 is a function for sled moving the pickup portion 23 in a predetermined disc radial direction depicted at arrows C and D in Fig. 1 and is mounted on a lower surface of the base 25. More specifically, the pickup driving portion 26 comprises a pickup driving motor 29 having a driving shaft on which a gear 30 is mounted, a pickup driving mechanism 33 including other gears 31 and 32 engaged with the gear 30, a lead screw 34 driven through the pickup driving mechanism 33, a guide portion (guide shaft) 35 extending in parallel with the lead screw 34 to guide a movement of the pickup portion 23, and so on.

In the manner which is described in the above-mentioned JP-A 2000-20962, the lead screw 34 is called a main shaft while the guide shaft 35 is called a sub-shaft.

In the above-mentioned structure, the pickup portion 23 has an engaging portion 36 for engaging with sleds of the lead screw 34. Accordingly, when the pickup driving motor 29 rotates to rotatably drive the lead screw 34 through the pickup driving mechanism 33 by a rotation force of the pickup driving motor 29, the pickup portion 23 moves in the predetermined disc radial direction (the direction depicted at the arrows C and D). In addition, the base 25 has a long hole 25a formed therein. The long hole 25a has a formed position which corresponds to a moving direction of the pickup portion 23. Accordingly, the pickup portion 23 moves so as to be opposite to the disc over its moving range (data reading range) on reading data out of the disc.

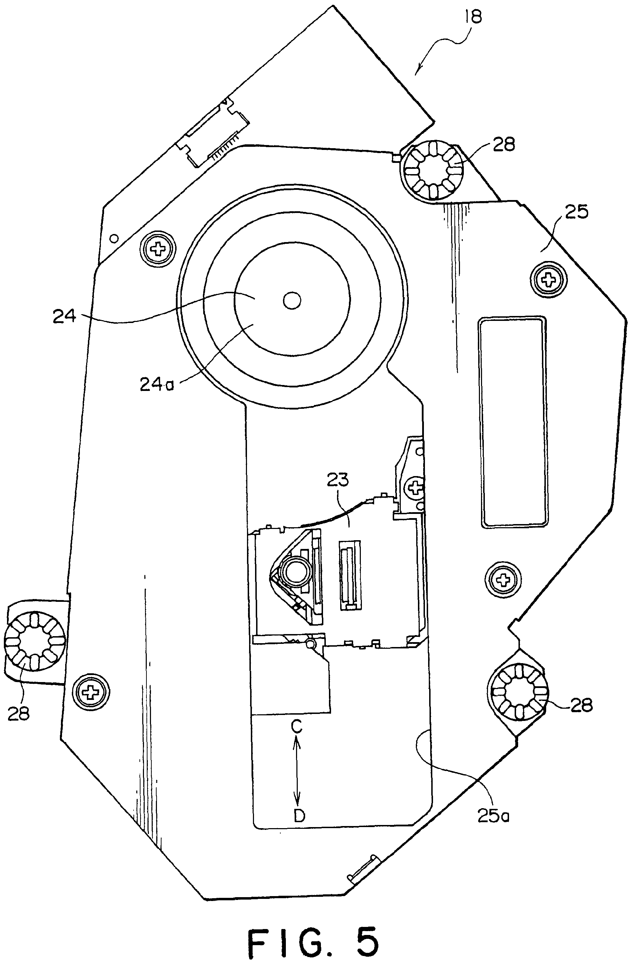

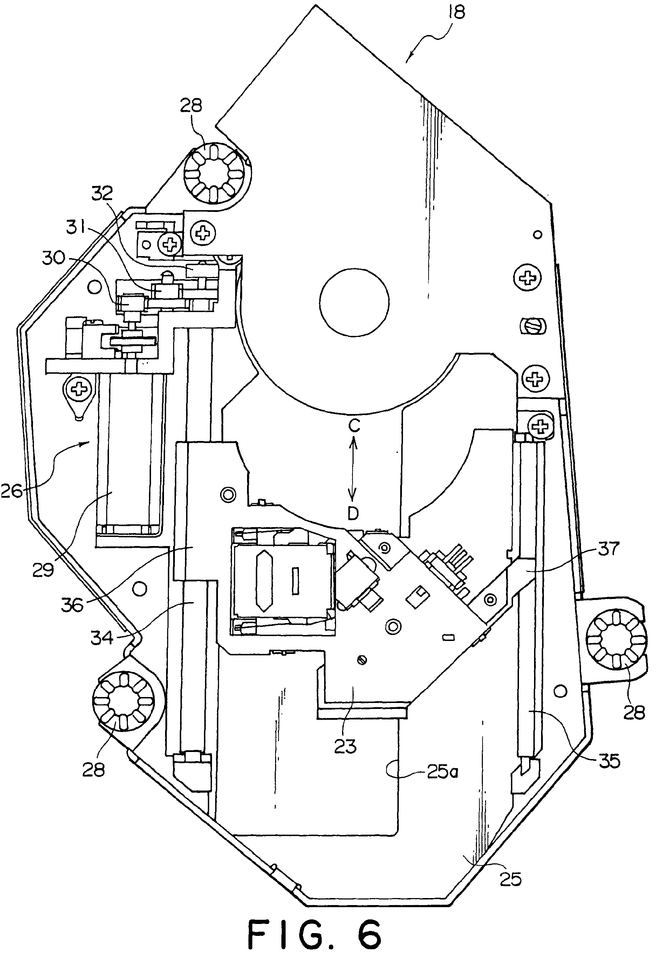

Referring to Figs. 5 and 6, an existing driving unit 18 will be described at first in order to facilitate an understanding of the present invention. Fig. 5 is a top view showing the driving unit 18 while Fig. 6 is a bottom view showing the driving unit 18. In addition, although Figs. 5 and 6 have a number of different arrangements from those illustrated in Figs. 1 through 4, it is noted that Figs. 5 and 6 are basically similar in structure and arrangements to those illustrated in Figs. 1 through 4. Accordingly, those having similar functions are attached with the same symbols.

The lead screw 34 serving as the main shaft is arranged to extend in parallel with the disc radial direction C and D. The pickup portion 23 has the engaging portion 36 for engaging with the sleds of the lead screw 34. On the other hand, the guide shaft 35 acting as the sub-shaft extends in parallel with the lead screw 34 as shown in Fig. 6 and is for guiding a sled movement of the pickup portion 23. The pickup portion 23 includes a sliding contact portion (projection portion) 37 having a U-shaped cross section (see Fig. 8) that is slidably supported by the guide shaft 35.

As shown in Fig. 7, the pickup driving portion 26 (Fig. 6) has the main shaft 34 and the sub-shaft 35 for sled movably supporting the pickup portion 23 at both sides thereof in the predetermined disc radial direction C and D. In the existing disc drive, both of the main shaft 34 and the sub-shaft 35 are arranged so as to substantially extend in parallel with the predetermined disc radial direction C and D. That is, the main shaft 34 and the sub-shaft 35 are arranged in parallel with each other. In addition, as disclosed in the above-mentioned JP-A 2000-20962, a combination of the main shaft 34 and the sub-shaft 35 is called pickup guiding means for guiding the pickup portion 23 so as to reciprocate the pickup portion 23 in the predetermined disc radial direction C and D.

As mentioned before, the main shaft 34 comprises the lead screw which is arranged to extend in parallel with the disc radial direction as, for example, disclosed in the above-mentioned JP-A 9-44955. On the other hand, as shown in Figs. 7 and 8, the sub-shaft 35 comprises the guide portion (guide shaft) which extends in parallel with the lead screw 34 to guide the sled movement of the pickup portion 23. The pickup portion 23 comprises the sliding contact portion 37 having a U-shaped cross section that is slidably supported by the guide shaft 35.

In the disc drive, it is preferable that a skew between the pickup portion 23 and the disc is as small as possible. However, although the disc drive is assembled so that the skew becomes small, wear occurs between the guide shaft 35 and the sliding contact portion 37 of the pickup portion 23 while the pickup portion 23 repeats the sled movement and it results in increasing the skew caused by mainly wearing away of the sliding contact portion 37 of the pickup portion 23.

More specifically, inasmuch as the main shaft (lead screw) 34 and the sub-shaft (guide shaft) 35 are arranged in parallel with each other in the existing disc drive, the sliding contact portion 37 of the pickup portion 23 is in contact with the guide shaft 35 at only one contact point during the sled movement of the pickup portion 23. Accordingly, the wear of the sliding contact portion 37 is hard at this contact point and the wear therefore concentrates on this contact point. As a result, it is difficult to prevent the skew from increasing, as mentioned in the preamble of the instant specification.

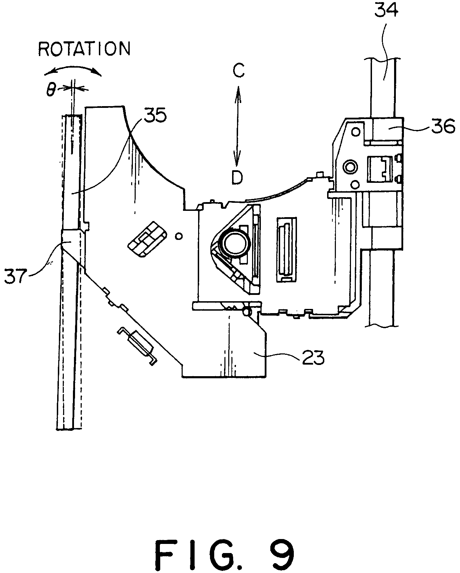

Referring to Fig. 9, the description will proceed to a disc drive according to a first embodiment of this invention. Fig. 9 shows a main portion (a pickup portion and pickup guiding means) of the disc drive according to the first embodiment of this invention. The illustrated disc drive is similar in structure and operation to the existing disc drive illustrated in Fig. 7 except that the sub-shaft 35 is arranged with the sub-shaft 35 inclined to the main shaft 34 by a predetermined inclined angle θ within a plane in parallel with the disc table surface 24a of the turn table 24 (Fig. 5) for the disc. In addition, in Fig. 9, a position of an existing sub-shaft is depicted at a broken line and the sub-shaft 35 is rotated from the existing sub-shaft by the predetermined inclined angle θ.

When the sub-shaft 35 is rotated to the existing sub-shaft, it is desirable that a rotational center is a center of the sub-shaft 35 (or a middle in a longitudinal direction) and the sub-shaft is rotated about the rotation center within the plane in parallel with the disc table surface 24a of the turn table 24 (Fig. 5) for the disc.

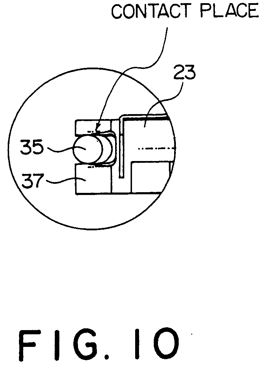

With this structure, as shown in Fig. 10, the sliding contact portion 37 of the pickup portion 23 is in contact with the guide shaft (the sub-shaft) 35 within a range of a predetermined line segment while the pickup portion 23 sled moves. Accordingly, it is possible to prevent wear from concentrating at one place because a range where the sliding contact portion 37 wears is dispersed. As a result, it is possible to prevent the skew from increasing by making wear in the sliding contact portion 37 of the pickup portion 23 as small as possible.

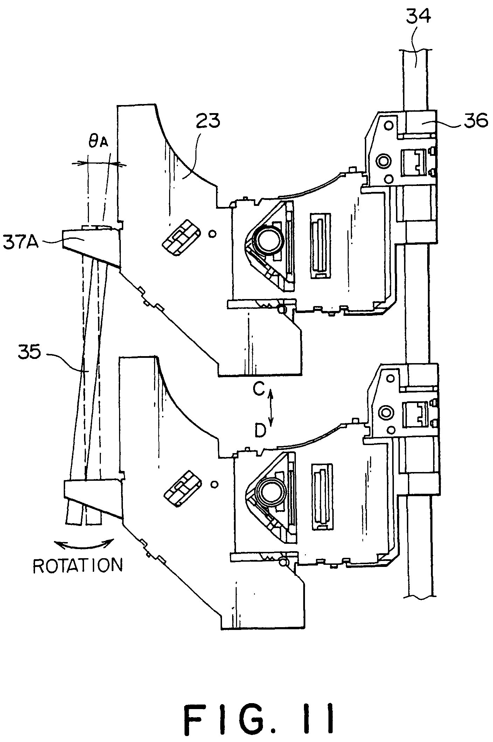

Referring to Fig. 11, the description will proceed to a disc drive according to a second embodiment of this invention. Fig. 11 shows a main portion (a pickup portion and pickup guiding means) of the disc drive according to the second embodiment of this invention. The illustrated disc drive is similar in structure and operation to the disc drive illustrated in Fig. 9 except that the pickup portion 23 comprises a sliding contact portion 37A extending laterally outward a little longer than the sliding contact portion 37 in Fig. 9 whereby an inclined angle θA of the sub-shaft 35 to the main shaft 34 is larger than the inclined angle θ in Fig. 9.

With this structure, it is possible to make wear in the sliding contact portion 37A of the pickup portion 23 smaller in comparison with that in the sliding contact portion 37 of the pickup portion 23 in Fig. 9. As a result, it is possible to more effectively prevent the skew from increasing.

While this invention has thus far been described in conjunction with a few preferred embodiments thereof, it will now be readily possible for those skilled in the art to put this invention into various other manners. For example, although the description has been exemplified in a case of being applied to the CD-ROM drive in the above-mentioned embodiments, this invention is not restricted to those and may be applicable to a CD-R drive, a CD-RW drive, or a DVD-RAM drive. In addition, although the description has been exemplified in a case of being applied to the tray incorporated type disc drive, this invention may be applicable to the unit contained type disc drive. Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

In a disc drive having a pickup portion (23) and a pickup guiding arrangement for reciprocatably guiding the pickup portion in a disc radial direction (C, D), the pickup guiding arrangement consists of a combination of a main shaft (34) and a sub-shaft (35) which is arranged with the sub-shaft inclined to the main shaft by a predetermined angle (θ) within a plane in parallel with a disc table surface (24a) of a turn table (24). The pickup portion (23) includes a sliding contact portion (37, 37A) for being slidably in contact with the sub-shaft. The sliding contact portion (37A) extends laterally outward a longer. The sliding contact portion may have a U-shaped cross section.

## Claims

1. A disc drive (10) comprising a pickup portion (23) for picking up data from a disc, a turn table (24) for rotating said disc, said turn table having a disc table surface (24a) for receiving said disc, and a pickup driving portion (26) for moving said pickup portion in a predetermined disc radial direction (C, D), said pickup driving portion including a main shaft (34) and a sub-shaft (35) for supporting said pickup portion at both sides thereof for movement in said predetermined disc radial direction, **characterised in that** said sub-shaft (35) is inclined to said main shaft (34) by a predetermined angle (θ, θA) within a plane substantially parallel to the disc table surface.

2. A disc drive as claimed in Claim 1, wherein said main shaft comprises a lead screw (34) and said sub-shaft comprises a guide shaft (35).

3. A disc drive as claimed in Claim 1, said pickup portion including a sliding contact portion (37A) for slidably contacting said sub-shaft (35), wherein said sliding contact portion (37A) extends laterally outward relative to said sub-shaft.

4. A disc drive as claimed in Claim 3, wherein said sliding contact portion (37A) has a U-shaped cross section.
